# EUROPEAN PATENT APPLICATION

(11) **EP 4 598 171 A1**
(43) Date of publication of application: **06.08.2025**
(21) Application number: 23873227.5
(22) Date of filing: 27.09.2023
(51) Int. Cl.: H04W 64/00, H04W 24/08, H04W 4/08, H04L 5/00

(54) **POSITION MEASURING METHOD AND DEVICE USING GROUP CAST IN WIRELESS COMMUNICATION SYSTEM**

(30) Priority: 28.09.2022 KR 20220123696
(71) Applicant: Samsung Electronics Co., Ltd., Suwon-si, Gyeonggi-do 16677 (KR)
(72) Inventor: HWANG, June, Suwon-si Gyeonggi-do 16677 (KR); KANG, Hyunjeong, Suwon-si Gyeonggi-do 16677 (KR); LEE, Taeseop, Suwon-si Gyeonggi-do 16677 (KR)
(74) Representative: Nederlandsch Octrooibureau
(86) International application number: PCT/KR2023/015066
(87) International publication number: WO 2024/072118

(57) **Abstract**

The present disclosure relates to a 5G or 6G communication system for supporting a higher data transmission rate. A method performed by a first terminal in a wireless communication system may comprise transmitting, to a plurality of second terminals included in a group for sidelink positioning (SL-P), SL-P configuration information including at least one of capability information on the first terminal, assistance information for the SL-P, or location request information through groupcast or broadcast, transmitting an SL-positioning reference signal (PRS) to the plurality of second terminals, based on the SL-P configuration information and receiving measurement reports for the SL-PRS from the plurality of second terminals.

## Description

### [Technical Field]

The disclosure relates to a position measuring method and device using groupcast in a wireless communication system. Specifically, the disclosure relates to a technology of using terminal-to-terminal communication to derive the location of a particular terminal.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

An embodiment of the disclosure is to provide a device and a method capable of effectively providing services in a wireless communication system.

### [Solution to Problem]

A method performed by a first terminal in a wireless communication system may include transmitting, to a plurality of second terminals included in a group for sidelink positioning (SL-P), SL-P configuration information including at least one of capability information on the first terminal, assistance information for the SL-P, or location request information through groupcast or broadcast, transmitting an SL-positioning reference signal (PRS) to the plurality of second terminals, based on the SL-P configuration information, and receiving measurement reports for the SL-PRS from the plurality of second terminals.

A first terminal in a wireless communication system may include a transceiver and a controller coupled with the transceiver, wherein the controller is configured to transmit, to a plurality of second terminals included in a group for sidelink positioning (SL-P), SL-P configuration information including at least one of capability information on the first terminal, assistance information for the SL-P, or location request information through groupcast or broadcast, transmit an SL-positioning reference signal (PRS) to the plurality of second terminals, based on the SL-P configuration information, and receive measurement reports for the SL-PRS from the plurality of second terminals.

A method performed by a second terminal included in a group for sidelink positioning (SL-P) in a wireless communication system may include receiving, from a first terminal, SL-P configuration information including at least one of capability information on the first terminal, assistance information for the SL-P, or location request information through groupcast or broadcast, receiving, from the first terminal, an SL-positioning reference signal (PRS) based on the SL-P configuration information, and transmitting a measurement report for the SL-PRS to the first terminal.

A second terminal included in a group for sidelink positioning (SL-P) in a wireless communication system may include a transceiver and a controller coupled with the transceiver, wherein the controller may be configured to receive, from a first terminal, SL-P configuration information including at least one of capability information on the first terminal, assistance information for the SL-P, or location request information through groupcast or broadcast, receive, from the first terminal, an SL-positioning reference signal (PRS) based on the SL-P configuration information, and transmit a measurement report for the SL-PRS to the first terminal.

### [Advantageous Effects of Invention]

An embodiment of the disclosure provides a device and a method capable of effectively providing services in a wireless communication system.

According to an embodiment of the disclosure, a random terminal may obtain a relative or absolute location through another terminal.

Advantageous effects obtainable from the disclosure may not be limited to the above - mentioned effects, and other effects which are not mentioned may be clearly understood from the following descriptions by those skilled in the art to which the disclosure pertains.

### [Brief Description of Drawings]

FIG. 1 illustrates a structure of an LTE system according to an embodiment of the disclosure.
FIG. 2 illustrates a radio protocol structure of an LTE system according to an embodiment of the disclosure.
FIG. 3 illustrates a structure of a wireless communication system according to an embodiment of the disclosure.
FIG. 4 illustrates a radio protocol structure of a wireless communication system according to an embodiment of the disclosure.
FIG. 5 is a block diagram illustrating a structure of a UE according to an embodiment of the disclosure.
FIG. 6 is a block diagram illustrating the configuration of an NR gNB according to an embodiment of the disclosure.
FIG. 7A shows an example relating to a case where groupcast is used in sidelink for SL-P according to an embodiment of the disclosure;
FIG. 7B shows an example relating to a case where groupcast is used in sidelink for SL-P according to an embodiment of the disclosure;
FIG. 8 shows an example of transmitting groupcast on PC5 by a terminal for SL-POS according to an embodiment of the disclosure;
FIG. 9 is an example diagram of a case where a UP protocol stack is used when a groupcast/broadcast SL-P message is transmitted according to an embodiment of the disclosure;
FIG. 10 is an example diagram of a case where a CP protocol stack is used when a groupcast/broadcast SL-P message is transmitted according to an embodiment of the disclosure;
FIG. 11 is an example diagram of a case where a MAC CE is used when a groupcast SL-P message is transmitted according to an embodiment of the disclosure;
FIG. 12 illustrates a structure of a UE in a wireless communication system according to an embodiment of the disclosure.
FIG. 13 illustrates a structure of a base station in a wireless communication system according to an embodiment of the disclosure.

### [Mode for the Invention]

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Obviously, the examples given above are not limiting.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also require a packet error rate of 10⁻⁵ or less. Therefore, for the services supporting URLLC, a 5G system must provide a transmit time interval (TTI) shorter than those of other services, and may also require a design for assigning a large number of resources in a frequency band in order to secure reliability of a communication link.

The above described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

Furthermore, in the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

The disclosure relates to a transmission method and procedure required at the time of groupcast use in a case where positioning is performed using terminal-to-terminal communication, and a method of transmitting a message required for each procedure and a detailed description of the message will be provided.

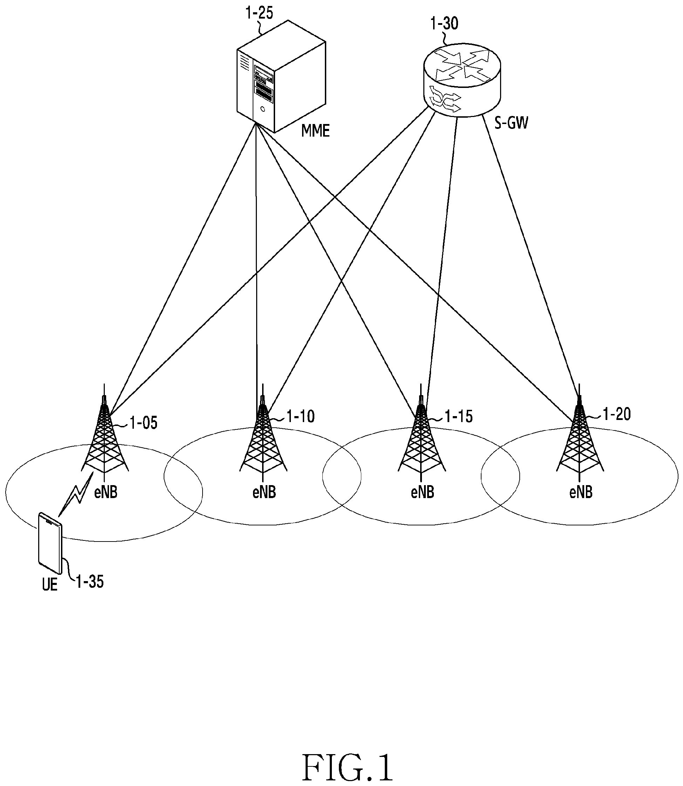

FIG. 1 illustrates a structure of an LTE system according to an embodiment of the disclosure.

Referring to FIG. 1, a radio access network of an LTE system according to an embodiment may include next-generation base stations (evolved node Bs, hereinafter ENBs, node Bs, or base stations) 1-05, 1-10, 1-15, and 1-20, a mobility management entity (MME) 1-25, and/or a serving gateway (S-GW) 1-30. A user equipment (hereinafter UE or terminal) 1-35 may access an external network through the ENBs 1-05, 1-10, 1-15, and 1-20 and the S-GW 1-30.

In FIG. 1, each of the ENBs 1-05 to 1-20 may correspond to a conventional node B in a UMTS system. The ENBs may be connected to the UE 1-35 through a radio channel, and perform more complicated roles than the conventional node Bs. In the LTE system, since all user traffic including real-time services, such as voice over IP (VoIP) via the Internet protocol, may be serviced through a shared channel. Thus, a device that collects state information, such as buffer states, available transmit power states, and channel states of UEs, and performs scheduling accordingly is required, and the ENBs 1-05 to 1-20 may serve as the device. In general, one ENB may control multiple cells. For example, in order to implement a transfer rate of 100 Mbps, the LTE system may use orthogonal frequency division multiplexing (OFDM) as a radio access technology in a bandwidth of, for example, 20 MHz. Furthermore, the LTE system may employ an adaptive modulation & coding (AMC) scheme for determining a modulation scheme and a channel coding rate according to a channel state of a UE. The S-GW 1-30 is a device that provides a data bearer, and may generate or remove a data bearer under the control of the MME 1-25. The MME is a device responsible for various control functions as well as a mobility management function for a UE, and may be connected to multiple base stations.

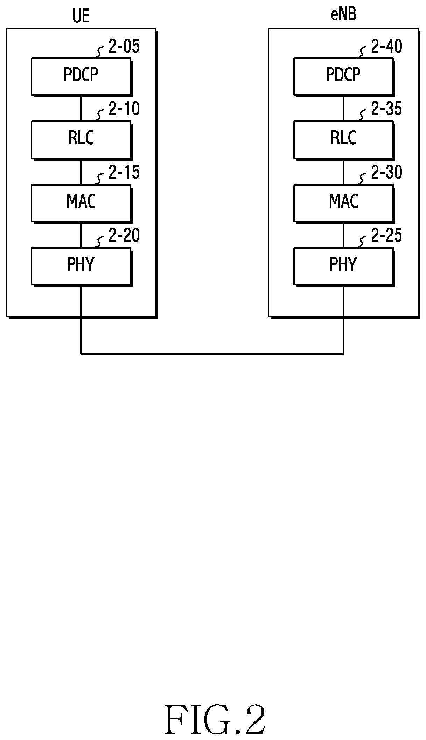

FIG. 2 illustrates a radio protocol structure of an LTE system according to an embodiment of the disclosure.

Referring to FIG. 2, a radio protocol of an LTE system according to an embodiment may include a packet data convergence protocol (PDCP) 2-05 or 2-40, a radio link control (RLC) 2-10 or 2-35, and a medium access control (MAC) 2-15 or 2-30 on each of UE and ENB sides. The PDCP may serve to perform operations such as IP header compression/reconstruction. The main functions of the PDCP may include at least some of functions below. However, the functions of the PDCP are not limited to examples below, and the PDCP may further perform functions other than examples below.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (RLC) 2-10 or 2-35 may reconfigure a PDCP protocol data unit (PDU) into an appropriate size to perform an ARQ operation. The main functions of the RLC may include at least some of functions below. However, the functions of the RLC are not limited to examples below, and the RLC may further perform functions other than examples below.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 2-15 or 2-30 may be connected to several RLC layer devices configured in a single terminal, and multiplex RLC PDUs into a MAC PDU and demultiplex a MAC PDU into RLC PDUs. The main functions of the MAC may include some of functions below. However, the functions of the MAC are not limited to examples below, and the MAC may further perform functions other than examples below.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 2-20 or 2-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

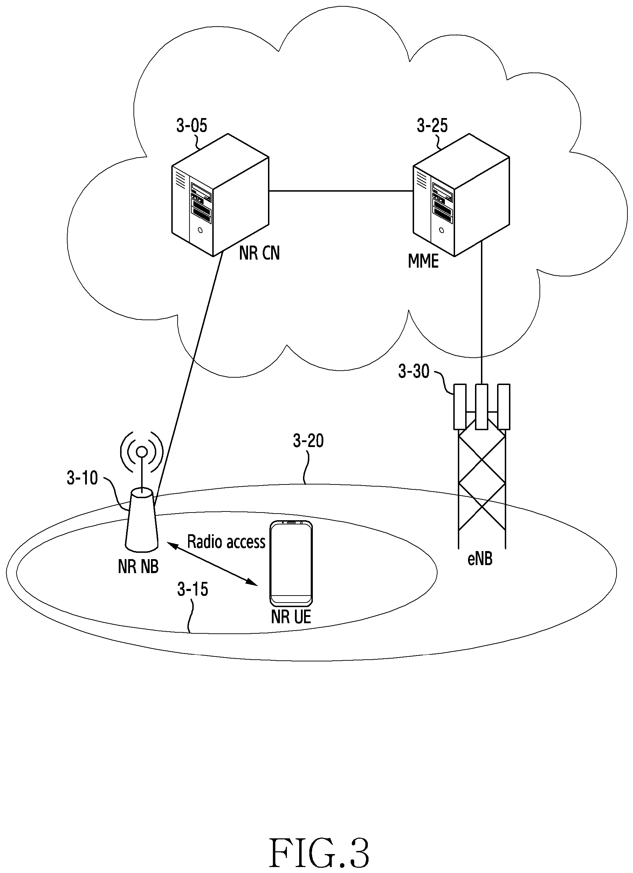

FIG. 3 illustrates a structure of a wireless communication system according to an embodiment.

Referring to FIG. 3, a radio access network of a next-generation mobile communication system (hereinafter NR or 5G) according to ana embodiment may be configured by a new radio node B (hereinafter NR gNB or NR base station) 3-10, and a new radio core network (NR CN) 3-05. A new radio user equipment (NR UE or NR terminal) 3-15 may access an external network via the NR gNB 3-10 and the NR CN 3-05. As used herein, the expression "be configured by" may be used interchangeably with the expression "include". For example, the next-generation mobile communication system (or wireless communication system) may include the new radio node B 3-10 and the new radio core network 3-05.

Referring to FIG. 3, the NR gNB 3-10 may correspond to an evolved node B (eNB) of a conventional LTE system. The NR gNB may be connected to the NR UE 3-15 through a radio channel and provide outstanding services as compared to a conventional node B. In the next-generation mobile communication system (or wireless communication system), since all user traffic may be serviced through a shared channel. Thus, a device that collects state information, such as buffer states, available transmit power states, and channel states of UEs, and performs scheduling accordingly is required, and the NR gNB 3-10 may be responsible for the scheduling. In general, one NR gNB may control multiple cells. In order to implement ultrahigh-speed data transfer beyond the current LTE, the next-generation mobile communication system may provide a wider bandwidth than the existing maximum bandwidth. in addition, the next-generation mobile communication system may employ an orthogonal frequency division multiplexing (OFDM) as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE. The NR CN 3-05 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the existing LTE system, and the NR CN may be connected to an MME 3-25 via a network interface. The MME may be connected to an eNB 3-30 that is an LTE base station.

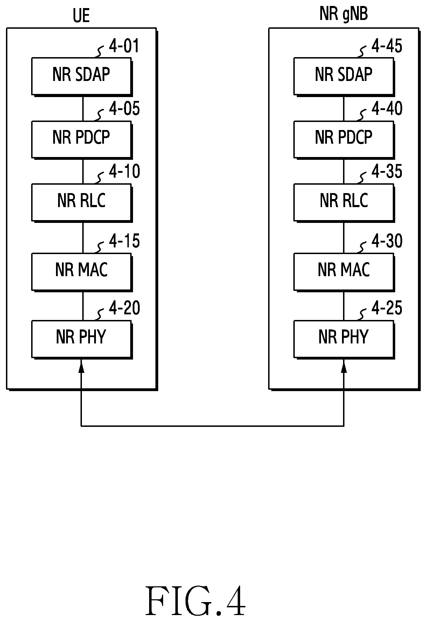

FIG. 4 illustrates a radio protocol structure of a wireless communication system according to the disclosure.

Referring to FIG. 4, a radio protocol of a next-generation mobile communication system according to an embodiment may include an NR service data adaptation protocol (SDAP) 4-01 or 4-45, an NR PDCP 4-05 or 4-40, an NR RLC 4-10 or 4-35, an NR MAC 4-15 or 4-30, and an NR PHY 4-20 or 4-25 on each of UE and an NR base station sides.

The main functions of the NR SDAP 4-01 or 4-45 may include some of functions below. However, the functions of the NR SDAP 4-01 or 4-45 are not limited to examples below, and the NR SDAP 4-01 or 4-45 may further perform functions other than examples below.
- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. In case that an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 4-05 or 4-40 may include some of functions below. However, the functions of the NR PDCP 4-05 or 4-40 are not limited to examples below, and the NR PDCP 4-05 or 4-40 may further perform functions other than examples below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device may refer to a function of reordering PDCP PDU received from a lower layer in an order based on PDCP sequence numbers (SNs). The reordering of the NR PDCP device may include a function of delivering data to the upper layer in a reordered sequence, or may include a function of delivering data to the upper layer directly without considering the sequence. The reordering of the NR PDCP device may include a function of reordering the sequence to record lost PDCP PDUs. The reordering of the NR PDCP device may include a function of reporting the state of the lost PDCP PDUs to the transmitting side, and may include a function of requesting retransmission of the lost PDCP PDUs.

The main functions of the NR RLC 4-10 or 4-35 may include at least some of functions below. However, the functions of the NR RLC are not limited to examples below, and the NR RLC may further perform functions other than examples below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device may refer to a function of successively delivering RLC SDUs received from the lower layer to the upper layer. In case that one original RLC SDU is divided into several RLC SDUs and the RLC SDUs are received, the in-sequence delivery function of the NR RLC device may include a function of reassembling the several RLC SDUs and transferring the reassembled RLC SDUs.

The in-sequence delivery of the NR RLC device may include a function of reordering the received RLC PDUs with reference to the RLC sequence number (SN) or PDCP sequence number (SN) and a function of recording RLC PDUs lost as a result of reordering. The in-sequence delivery of the NR RLC device may include a function of reporting the state of the lost RLC PDUs to the transmitting side, and may include a function of requesting retransmission of the lost RLC PDUs.

The in-sequence delivery of the NR RLC device may include a function of, in case that there is a lost RLC PDU, delivering only RLC SDUs before the lost RLC PDU to the upper layer in sequence.

The in-sequence delivery of the NR RLC device may include a function of, although there is a lost RLC SDU, in case that a predetermined timer has expired, sequentially transferring, to the upper layer, all the RLC SDUs received before the timer is started.

The in-sequence delivery of the NR RLC device may include a function of, although there is a lost RLC SDU, in case that a predetermined timer has expired, sequentially transferring all the RLC SDUs received up to now, to the upper layer.

The NR RLC device may process RLC PDUs in a reception sequence, regardless of a sequence based on sequence numbers (out-of-sequence delivery). and then deliver the processed RLC PDUs to the NR PDCP device.

If receiving segments, the NR RLC device may receive segments stored in a buffer or to be received in the future, reconfigure the segments into one whole RLC PDU, process the RLC PDU, and then deliver the processed RLC PDU to the NR PDCP device.

The NR RLC layer may not include the concatenation function, which may be performed in the NR MAC layer or replaced with a multiplexing function of the NR MAC layer.

The above-mentioned out-of-sequence delivery of the NR RLC device may refer to a function of instantly delivering RLC SDUs received from the lower layer to the upper layer regardless of the order. The out-sequence delivery of the NR RLC device may include a function of, in case that one original RLC SDU is segmented into multiple RLC SDUs and the segmented RLC SDUs are received, reassembling the RLC SDUs and delivering the reassembled RLC SDUs. The out-of-sequence delivery function of the NR RLC device may include a function of storing an RLC sequence number (SN) or a PDCP sequence number (SN) of received RLC PDUs and arranging order to record lost RLC PDUs.

The NR MAC 14-15 or 4-30 may be connected to multiple NR RLC layer devices configured in one UE, and the main functions of the NR MAC may include some of functions below. However, the functions of the NR MAC are not limited to examples below, and the NR MAC may further perform functions other than examples below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 4-20 or 4-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

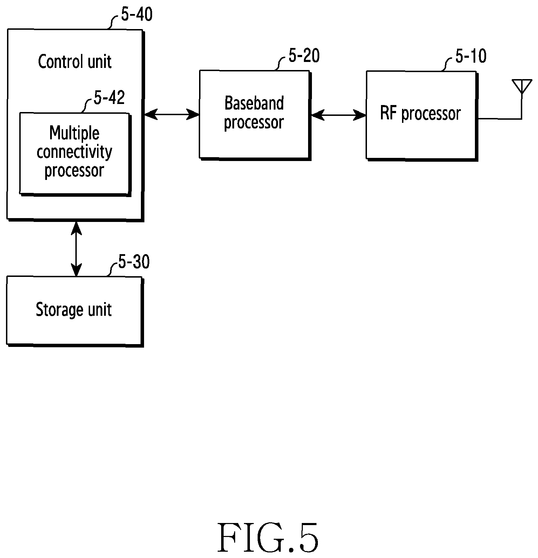

FIG. 5 is a block diagram illustrating a structure of a UE according to an embodiment of the disclosure.

Referring to FIG. 5, the UE may include a radio frequency (RF) processor 5-10, a baseband processor 5-20, a storage unit 5-30, and a controller 5-40.

The RF processor 5-10 may perform functions for transmitting/receiving signals through a radio channel, such as signal band conversion and amplification. That is, the RF processor 5-10 may up-convert a baseband signal provided from the baseband processor 5-20 to an RF band signal, may transmit the same through an antenna, and may down-convert an RF band signal received through the antenna to a baseband signal.

For example, the RF processor 5-10 may include a transmission filter, a reception filter, an amplifier, a mixer, an oscillator, a digital-to-analog converter (DAC), and/or an analog-to-digital converter (ADC). Although only one antenna is illustrated in FIG. 5, the UE may include multiple antennas. In addition, the RF processor 5-10 may include multiple RF chains. Furthermore, the RF processor 5-10 may perform beamforming. For the beamforming, the RF processor 5-10 may adjust the phase and magnitude of each of signals transmitted and/or received through multiple antennas or antenna elements. In addition, the RF processor may perform MIMO, and may receive multiple layers when performing a MIMO operation.

The baseband processor 5-20 may perform functions of conversion between baseband signals and bitstrings according to the system's physical layer specifications. For example, during data transmission, the baseband processor 5-20 may encode and modulate a transmitted bitstring to generate complex symbols. In addition, during data reception, the baseband processor 5-20 may demodulate and decode a baseband signal provided from the RF processor 5-10 to restore a received bitstring. For example, when following the orthogonal frequency division multiplexing (OFDM) scheme, during data transmission, the baseband processor 5-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 5-20 may split a baseband signal provided from the RF processor 5-10 at the OFDM symbol level, may restore signals mapped to subcarriers through a fast Fourier transform (FFT) operation, and may restore a received bitstring through demodulation and decoding.

The baseband processor 5-20 and the RF processor 5-10 may transmit and receive signals as described above. Therefore, the baseband processor 5-20 and the RF processor 5-10 may be referred to as a transmitter, a receiver, a transceiver, or a communication unit. Furthermore, at least one of the baseband processor 5-20 and the RF processor 5-10 may include multiple communication modules to support multiple different radio access technologies. In addition, at least one of the baseband processor 5-20 and the RF processor 5-10 may include different communication modules to process signals in different frequency bands. For example, the different radio access technologies may include wireless LANs (for example, IEEE 802.11), cellular networks (for example, LTE), and the like. In addition, the different frequency bands may include super high frequency (SHF) (e.g., 2 NRHz) bands and millimeter wave (mmWave) (e.g., 60GHz) bands.

The storage unit 5-30 may store data such as basic programs for operation of the UE, application programs, and configuration information. Particularly, the storage unit 5-30 may store information regarding a second access node configured to perform wireless communication by using a second radio access technology. In addition, the storage unit 5-30 may provide the stored data at the request of the controller 5-40.

The controller 5-40 controls overall operations of the UE. For example, the controller 5-40 may transmit/receive signals through the baseband processor 5-20 and the RF processor 5-10. In addition, the controller 5-40 records data in the storage unit 5-30 and reads the data from the storage unit 5-30. To this end, the controller 5-40 may include at least one processor. For example, the controller 5-40 may include a communication processor (CP) configured to perform control for communication, and an application processor (AP) configured to control upper layers such as application programs.

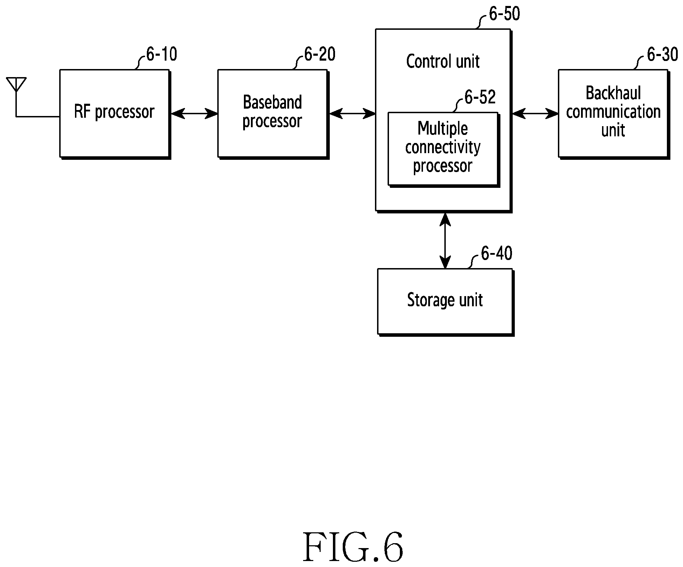

FIG. 6 is a block diagram illustrating the configuration of an NR gNB according to an embodiment of the disclosure.

Referring to FIG. 6, the base station may include an RF processor 6-10, a baseband processor 6-20, a backhaul communicator 6-30, a storage unit 6-40, and a controller 6-50.

The RF processor 6-10 may perform a function for transmitting and receiving a signal via a wireless channel, such as band conversion and amplification of the signal. The RF processor 6-10 may up-convert a baseband signal provided from the baseband processor 6-20 to an RF band signal, may transmit the same through an antenna, and may down-convert an RF band signal received through the antenna to a baseband signal. For example, the RF processor 6-10 may include a transmission filter, a reception filter, an amplifier, a mixer, an oscillator, a DAC, and an ADC. Although only one antenna is illustrated in FIG. 6, the first access node may include multiple antennas. In addition, the RF processor 6-10 may include multiple RF chains. Furthermore, the RF processor 6-10 may perform beamforming. For the beamforming, the RF processor 1h-10 may adjust the phase and magnitude of each of signals transmitted and/or received through multiple antennas or antenna elements. The RF processor may transmit one or more layers to perform a downward MIMO operation.

The baseband processor 6-20 may perform functions of conversion between baseband signals and bitstrings according to the physical layer specifications of first radio access technology. For example, during data transmission, the baseband processor 6-20 may encode and modulate a transmitted bitstring to generate complex symbols. In addition, during data reception, the baseband processor 6-20 may demodulate and decode a baseband signal provided from the RF processor 6-10 to restore a received bitstring. For example, when following the OFDM scheme, during data transmission, the baseband processor 6-20 may encode and modulate a transmitted bitstring to generate complex symbols, may map the complex symbols to subcarriers, and may configure OFDM symbols through IFFT operation and CP insertion. In addition, during data reception, the baseband processor 6-20 may split a baseband signal provided from the RF processor 6-10 at the OFDM symbol level, may restore signals mapped to subcarriers through FFT operation, and may restore a received bitstring through demodulation and decoding. The baseband processor 6-20 and the RF processor 6-10 may transmit and receive signals as described above. Therefore, the baseband processor 6-20 and the RF processor 6-10 may be referred to as a transmitter, a receiver, a transceiver, a communication unit, or a wireless communication unit.

The backhaul communication unit 6-30 may provide an interface for performing communication with other nodes within a network. That is, the backhaul communication unit 6-30 may convert bitstrings transmitted from the main gNB to other nodes (for example, auxiliary gNB, core network) to physical signals, and may convert physical signals received from the other nodes to bitstrings.

The storage unit 6-40 may store data such as basic programs for operations of the gNB, application programs, and configuration information. Particularly, the storage unit 6-40 may store information regarding a bearer allocated to a connected UE, a measurement result reported from the connected UE, and the like. In addition, the storage unit 6-40 may store information serving as a reference to determine whether to provide multi-connection to a UE or to suspend the same. In addition, the storage unit 6-40 may provide data stored therein at the request of the controller 6-50.

The controller 6-50 may control the overall operation of the main base station. For example, the controller 6-50 may transmit/receive signals through the baseband processor 6-20 and the RF processor 6-10 or through the backhaul communication unit 6-30. In addition, the controller 6-50 may record data in the storage unit 6-40 and reads the data from the storage unit 6-40. To this end, the controller 6-50 may include at least one processor.

The words having the following definitions may be used in the disclosure. However, it may be obvious to a person skilled in the art that this is merely for explaining the definitions of the words described below and is not intended to limit the disclosure.
- Target UE: A UE to be subjected to positioning
- Reference UE: A UE capable of exchanging a signal and/or information on sidelink to identify the location of a target UE
- SL-POS: This indicates sidelink positioning
- SL-P: This is an abbreviation for sidelink positioning protocol and refers to a protocol that operates to identify the location of a particular UE by using UE-to-UE communication or communication with a base station.
- SL-PRS: This is a sidelink positioning reference signal and means a reference signal transmitted through a UE-to-UE PC5 interface

When a UE is to perform positioning through sidelink (in a case of a target UE) or is to transmit and/or receive information and/or a sidelink position reference signal (SL-PRS) to assist positioning of another UE, SL-P may be used. In the disclosure, transmission/reception messages between UEs required for performing SL-POS may be transferred through groupcast/broadcast, and the following operations may be provided in association with a signal that is groupcast or broadcast.
- An SL-P message that is groupcast or broadcast may be a separate SL-P message for groupcast or broadcast. An SL-P message that is groupcast or broadcast may include, in a public SL-P message, an indicator indicating groupcast or broadcast transmission or reception. An SL-P message that is groupcast or broadcast may be included in a field indicating groupcast or broadcast transmission or reception. An SL-P message that is groupcast or broadcast may include a groupcast or broadcast address so that the message is transmitted using a groupcast or broadcast DST L2 ID. An SL-P groupcast/broadcast message may be the following types of messages. As another example, an SL-P groupcast/broadcast message may include the following types of messages.
- SL-P capability request/response (details omitted)
- SL-P assistance data request/response
- SL-PRS configuration information
- SL-P request location information / response
- Ranging request / response
- Ranging request/response: When role information of a transmission UE having transmitted a message and/or role information on a role desired from a counterpart UE and SL-P capability information of the transmission UE are transferred in a ranging request message, a reception UE may accept a request to participate in SL-P (or ranging) if the transmission UE wants for a role performable by the reception UE.
- A ranging request message may include at least one of the following pieces of information.
- A ranging/SL-P role indicator that is an SL-P or ranging factor and indicates one of a reference UE or target UE
- An indicator indicating whether ranging/SL-P is one-time or periodic
- An indicator related to whether ranging/SL-P is for obtaining a distance, a direction, or both
- Preferred SL-PRS configuration information, supported positioning frequency layer, or supported or preferred SL-P scheme
- Ranging/SL-P capability information and/or a message or indicator that requests SL-P/ranging capability information of a reception UE
- SL-PRS configuration information on an SL-PRS which a reception UE is to measure for SL-P. SL-PRS configuration information may be a target frequency, bandwidth part (BWP), or resource pool in which a transmission UE of the message transmits an SL-PRS. In addition/alternatively, SL-PRS configuration information may be information on a target frequency, bandwidth part (BWP), and/or resource pool in which a reception UE of the message receives and measures an SL-PRS.
- A ranging request message may be a PC5-RRC message or PC5-S message.
- A ranging response message may include at least one of the following pieces of information.
- An indicator for a role to be performed by a transmission UE of a ranging response message when the transmission UE is to change a required role given in a request message
- Preferred SL-PRS configuration information. Preferred SL-PRS configuration information may include a positioning frequency layer or a preferred SL-P scheme.
- In case that a received request message includes SL-P capability information of a request message transmission UE, a request message reception UE may identify the SL-P capability information, determine whether the reception UE is able to cope, and mark, in a response message, an indicator indicating possible/impossible or whether coping is possible. In addition/alternatively, in case that an indicator requesting capability information of the request message reception UE exists in the request message, the response message may include SL-P/ranging-related capability information of a response message transmission UE
- In case that a request message includes SL-PRS configuration information transmitted by a request reception UE and required by a request message transmission UE, a response transmission UE may indicate whether the UE allows or does not allow the configuration information.
- In case that information that requesting measurement from a request message reception UE exists in a request message, the reception UE may include, in a response message, an indication relating to allowance or disallowance of the request.
- If (in case that) a request message includes information relating to whether positioning is one-time positioning or periodic positioning, information relating to whether positioning is for obtaining a distance or a direction, information relating to whether positioning is for obtaining both a distance and a direction, or information relating to a preferred positioning scheme, a reception UE may mark possible/impossible for each requirement in a separate field with respect to whether the UE is able or unable to accommodate the request information.
- A response message may be a PC5-RRC or PC5-S message. A response message may be referred to as a response message for a request message.
- If a UE having transmitted and/or received a request message is to participate in ranging, the UE that is to participate in the ranging may, based on pieces of SL-P-related configuration information included in the message, transfer the configuration information to an access stratum (AS) layer of the UE itself to enable the AS layer to perform an SL-P operation, based on the configuration information.
- As an SL-P operation, a UE having been determined as a transmission UE transmits an SL-PRS. A UE having been determined as a reception UE may receive and/or measure the transmitted SL-PRS and transfer a measurement result to a network or the SL-PRS transmission UE again.
- Capability request/response/announcement: This is a message that is used to request capability information from each UE associated with SL-P or respond to the request, or is used for the UE to transmit capability information of the UE.
- A capability request message may include at least one of the following pieces of information.
- It is possible to request information relating to whether each SL-POS scheme (e.g., SL-observed time difference of arrival (OTDOA), SL-angle of departure (AoD), SL-time difference of arrival (TDoA), SL-angle of arrival (AoA), SL-round trip time (RTT) etc.) is supported.
- A capability response message may include at least one of the following pieces of information.
- Whether segmentation of SL-P-related messages is supported
- A supported scheme among respective SL-POS schemes
- A capability announcement message may include at least one of the following pieces of information.
- The message may include whether segmentation of SL-P-related messages is supported and a supported scheme among respective SL-POS schemes.
- Request assistance data/providing assistance data: This is a message used to request or provide assistance data information associated with SL-P.
- A request assistance data message may include the following information.
- A UE measuring a transmitted SL-PRS may request SL-PRS configuration information relating to SL-PRS transmission.
- A providing assistance data message may include the following information.
- A UE transmitting an SL-PRS provides the same message and the message may include at least one of the following pieces of information. The information may be a positioning frequency layer or an absolute radio frequency channel number (ARFCN) that is information on a frequency at which an SL-PRS is transmitted, a BWP, resource pool information, or symbol level SL-PRS time/frequency position information.
- If a UE required to measure an SL-PRS has failed to receive a providing assistance data message, the UE may transfer a request assistance data message to an SL-PRS transmission UE.
- Request location information (or a request location information message) and/or providing location information may be described as below, but this is merely for explanation and does not limit the disclosure.
- A request location information message: An SL-PRS transmission UE may transmit a request location information message. The message is a message that requests a measurement target UE (reference UE, ref UE) to perform measurement and a given type of reporting. A measurement scheme preferred by the SL-PRS transmission UE may be indicated in the request location information message. In addition, a configuration of a reporting or position scheme may be included and transferred in the request location information message. For example, the reporting or position scheme may indicate one-time measurement reporting or periodic measurement reporting. In addition, the message may include an indication relating to whether the usage of this measurement is for a distance, an orientation, or both of them. A reception UE having received the indication may measure an SL-PRS according to the scheme. A UE transmitting providing assistance data and transmitting a request location information message may start SL-PRS transmission before transmitting the request location information message or after transmitting a providing assistance data message.
- Providing location information: This may be a message used by a UE having measured an SL-PRS when the UE transfers a measurement result to a UE having required transmission of the measurement result. When the UE having performed measurement is aware of a relative position or absolute position of the UE, relative position or absolute position information may be included and transferred in a providing location information message. In this case, the measuring UE may transfer not only a result such as the strength of an SL-PRS signal, a difference value between the arrival times of transmission paths, etc. as an SL-PRS measurement result, and but also relative or absolute position information of an SL-PRS transmission UE together in consideration of the relative position or absolute position of the measuring UE, based on the measurement result if a request location information transmission UE requests same. Such information may be transmitted by a separate message below.
- A location result sharing message: A location result sharing message is information used by a reference UE to transfer, to a target UE or a UE having transmitted an SL-PRS, a final positioning result value obtained by combining a result value obtained by measuring the SL-PRS and position information of the reference UE.

An SL-P message for groupcast/broadcast may be transferred using a control plane (CP) or user plane (UP) protocol stack.
- If a CP stack is used, the SL-P message for groupcast/broadcast may be carried in a PC5-RRC message or included in a PC5-S message.
- If an SL-P message for groupcast or broadcast is carried in PC5-S,
- An SL-P message for groupcast/broadcast may be transmitted through at least one of conventional SL-SRB 0/1/2. In this case, a groupcast Dest L2 ID is used in a MAC with respect to a message of SL-SRB0/1/2 through which the SL-P message is transmitted. That is, whether each message is groupcast or broadcast may be distinguished.
- A particular PC5-S message or an SL-P message included therein may include an indicator relating to whether the message is to be unicast or groupcast/broadcast in the message (e.g., header or subheader). In addition/alternatively, a Dest L2 ID to be used for transmission may be included in the SL-P message instead of the indicator. If a Dest L2 ID to be used for transmission is included instead of the indicator, when the transmission is performed, reception UEs perform a reception operation corresponding to unicast, gcast (or groupcast), or bcast (broadcast) according to whether the L2 ID is for unicast, groupcast, or broadcast (i.e., one/multiple/all reception UEs corresponding to each dest L2 ID may receive the message and then transfer same to a higher layer of a MAC).
- As an additional embodiment, information (an octet string or code, etc. related to a message name) notifying that a corresponding message is a message for SL-P or a message for groupcast or broadcast of SL-P may be transferred from a PC5-S entity or an SL-P entity to a PDCP, and the PDCP may identify an SL-P message or a PC5-S message received from a higher layer and then indicate a groupcast operation to a MAC.
- An SL-P message for groupcast/broadcast may be transmitted through conventional SL-SRB 4. In this case, an SL-P message for groupcast/broadcast may be encapsulated in an SL discovery message of PC5-S or may be included in a particular field. In particular, in a case of an SL-P capability request/response, SL-signaling radio bearer (SRB) 4 may be used.
- Legacy SL-SRB 4 may be capable of supporting all unicast/groupcast/broadcast. Therefore, also in this case, whether an SL-P message is for unicast/ groupcast/broadcast is determined in an SL-P message stage and a unicast/ groupcast/broadcast Dest L2 Id may be used in a MAC.
- An SL-SRB for a new groupcast/broadcast specific SL-P message may be established.
- In this case, in the above embodiment, when it is considered that a discovery msg is transmittable through SL-SRB4 through unicast/groupcast(gcast)/broadcast(bcast), that is, when a MAC is able to use a unicast Dest L2 Id, groupcast Dest L2 Id, or broadcast Dest L2 ID, a separate procedure of establishing an SL-SRB or link for gcast may not be required at a peer UE.
- Alternatively, in order to configure a dedicated SL-SRB for SL-P, a unicast connection procedure for establishing an SL-SRB between group members may be needed. In this case, when a gcast dedicated SL-SRB is established and gcast SL-SRB establishment target UEs are requested to perform establishment or a positive response is received after requesting establishment, a transmission UE (sender UE) (or TX UE) may establish a gcast dedicated SL-SRB. When requesting establishment target UEs to perform establishment, a transmission UE (sender UE) may request establishment of a gcast dedicated SL-SRB by using a conventional designated message (e.g., sidelinkRRCReconfig message) on PC5-RRC. When positive responses are received from all members of a group which desires establishment and has received the designated message, the transmission UE (sender UE) may transmit a groupcast message (gcast msg) through a dedicated SL-SRB. A reception UE may receive a gcast dedicated Sl-SRB establishment request message through unicast, establish a dedicated SL-SRB, and then receive a gcast SL-P message from the sender UE through the established dedicated SL-SRB.
- Fixed SL-SRB logical channel configuration information may be separately configured. That is, a transmission UE (sender UE), a reception UE (RX UE), or a UE involved in sidelink may obtain and/or process a fixed configuration for an SRB.
- Configuration information may be defined in Table 1 below (Example of SL-SRB). However, the defined pieces of configuration information merely correspond to an example and do not limit the disclosure.

**[Table 1]**

| PDCP configuration | | |
|---|---|---|
| >t-Reordering | Undefined | Selected by the receiving UE, up to UE implementation |
| >pdcp-SN-Size | 12 | For broadcast and groupcast of NR sidelink communication |
| >maxCID | 15 | For broadcast and groupcast of NR sidelink communication |
| >profiles | | |
| RLC configuration | | For broadcast and groupcast of NR sidelink communication, unidirectional UM RLC UM window size is set to 32 |
| >t-Reassembly | Undefined | Selected by the receiving UE, up to Up to UE implementation |
| *>sn-FieldLength* | 6 | For broadcast and groupcast of NR sidelink communication |
| >logicalChannelIdentity | integer value- | |
| MAC configuration | | |
| *>priority* | Integer value (1..8) | |

- Additionally, a hybrid automatic repeat request (HARQ) feedback option (HARQ feedback enable/disable) may be configured in a MAC configuration. Additionally, HARQ feedback may be enabled/disabled according to a Tx UE. In addition, a HARQ operation option may operate as one of the following two options (e.g., per member UE and shared feedback resource). (1. per member UE in group has dedicated feedback resource for ACK/NACK or 2. shared feedback resource for NACK or nothing). A configuration for a HARQ feedback option may be used for groupcast. In a case of a dedicated SL-SRB for SL-P, the above configuration information may be included, and a logical channel identity may be configured by a sender UE (TX UE).
- In a case where a message is transmitted through an SL-SRB, an indicator may be transferred from a PDCP to a higher layer to indicate whether the message is for SL-P and/or groupcast SL-P. Alternatively, the indicator may be transferred from a higher layer to the PDCP.
- A PDCP may recognize whether a message is a message for SL-P or PC5-S when PC5-S or SL-P arrives.
- Alternatively, more restrictively, an indicator may indicate that a message is an SL-P message for gcast. A PDCP having received the message (or indicator) may transfer same to an SL-P transmission logical channel for gcast (to lower layer). A reception PDCP of an RX UE having received the message (or indicator) may transfer an SL-P or PC5-S indicator to a higher layer.
- If a CP stack is used, an SL-P message itself may be an SDU of a PDCP (without PC5-RRC/PC5-S).
- A user plane (UP) stack may be used.
- A gcast specific data radio bearer (DRB) may be established.
- QoS flow mapping in an SDAP needed: A network may give a configuration that links the SL-P message to the dedicated SL-DRB; or
- A QoS flow ID (QFI) for PC5 data may be also applied for SL-P, and a network may give, to a UE, a configuration that maps the QFI to a gcast specific DRB.
- Alternatively, the mapping configuration may be pre-configured in a UE.
- Alternatively, a separate logical channel configuration for a gcast specific DRB may also be fixed to an RRC specification like an example of a case where a CP stack is used.

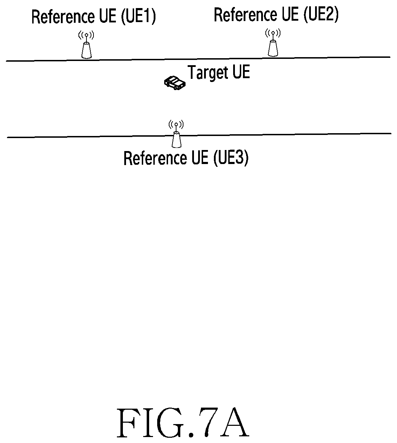

FIG. 7A shows an example relating to a case where groupcast is used in sidelink for SL-P according to an embodiment of the disclosure.

Referring to FIG. 7A, a wireless communication system according to an embodiment may include a target user equipment (target UE), a first UE (Ref UE, UE1), a second UE (Ref UE, UE2), and/or a third UE (Ref UE, UE3).

According to an embodiment, the target UE, the first UE (UE1), the second UE (UE2), and/or the third UE (UE3) may request a specific group of UEs for SL-P. For example, application layers of the target UE, the first UE (UE1), the second UE (UE2), and/or the third UE (UE3) may request a specific group of UEs for SL-P. In an embodiment, a specific group may be referred to as a group for groupcast communication in sidelink.

According to an embodiment, members (e.g., the target UE, the first UE (UE1), the second UE (UE2), and/or the third UE (UE3) of the specific group may successfully discover each other (e.g., AS discovery).

According to an embodiment, after a discovery procedure, when the target UE, the first UE (UE1), the second UE (UE2), and/or the third UE (UE3) successfully negotiate with each other for SL-P, the target UE, the first UE (UE1), the second UE (UE2), and/or the third UE (UE3) may perform groupcast communication.

According to an embodiment, a negotiator between the UEs, that is, a ranging request transaction may be referred to as a process in which role information and/or SLP capability information of the UEs is transferred and a process in which the UEs request to participate and the requested participation is accepted.

In a case where groupcast communication of the disclosure is performed, the UEs may obtain latency and precise location information. For example, when a PC5 unicast is established and a signal is transmitted and/or received through the established unicast, it may take a relatively long time for a UE (e.g., the first UE (UE1)) to obtain final location information of the target UE. In addition, such increased time consumption (or latency) may cause incorrect final location information received through unicast compared to the actual location of the target UE.

On the contrary, when groupcast communication is performed through PC5 or when broadcast communication is performed according to an embodiment, SL-P message (SL-P msg) transactions may increase the accuracy of final location information, and may increase the accuracy of final location information.

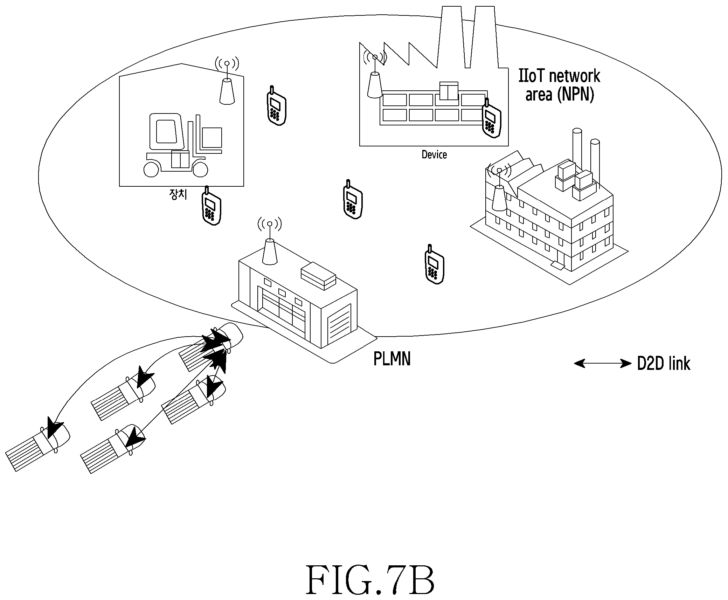

FIG. 7B shows an example relating to a case where groupcast is used in sidelink for SL-P according to an embodiment of the disclosure.

Referring to FIG. 7B, an example of a case where groupcast is used in sidelink for SL-P in a public land mobile network (PLMN) according to an embodiment is illustrated.

According to an embodiment, a plurality of UEs in a PLMN may perform groupcast communication as described with reference to FIG. 7A. For example, application layers of a plurality of UEs in the PLMN may request establishment or configuration of a particular group of UEs for SLL-P. In an example, a particular group may be referred to as a group for groupcast communication in sidelink. In an example, the plurality of UEs in the PLMN may successfully discover each other through AS discovery, and perform groupcast communication. In addition, the plurality of UEs may transmit SL-PRS measurement reports to a designated UE. The designated UE may measure the locations of the other UEs, based on the received SL-PRS measurement reports and information on the absolute or relative location of the designated UE.

According to an embodiment, a plurality of devices (e.g., vehicles) outside the PLMN may also perform groupcast communication as described with reference to FIG. 7A, and perform positioning, based on an SL-PRS measurement report. In an embodiment, it is obvious to a person skilled in the art that groupcast in sidelink is also usable between a plurality of devices (e.g., vehicles) outside the PLMN and a plurality of UEs in the PMLN. Therefore, a plurality of UEs in the PLMN and a plurality of devices (e.g., vehicles) outside the PLMN may establish or configure a group, perform groupcast communication, and perform positioning. In the above example, "outside the PLMN" may also indicate "out-of-coverage" meaning that Uu connection between a UE and a base station is difficult.

According to an embodiment, other devices positioned in an IoT network area of a non-public network (NPN) may also perform groupcast communication as described with reference to FIG. 7A, and perform positioning, based on an SL-PRS measurement report.

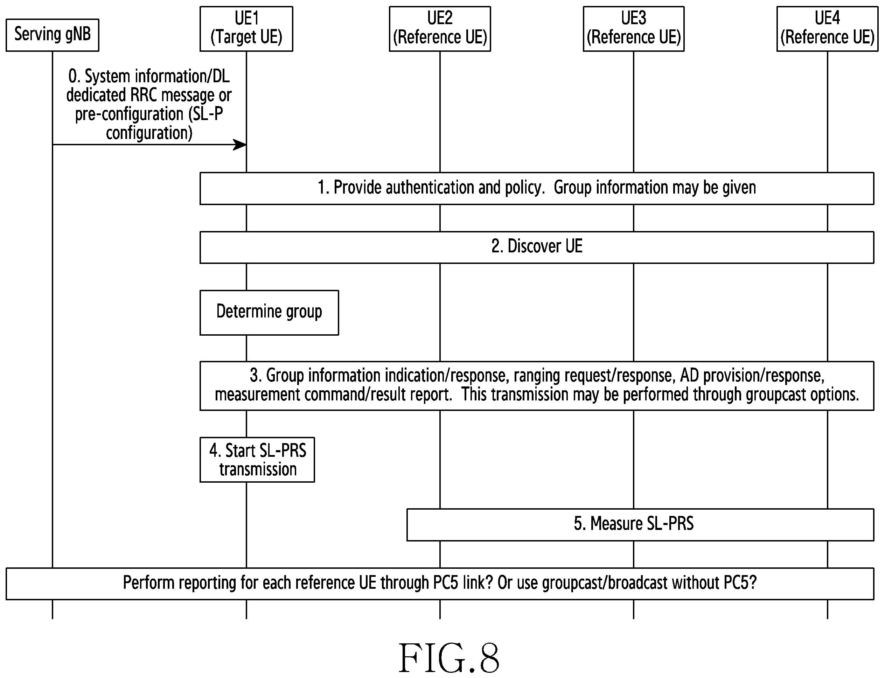

FIG. 8 shows an example of transmitting groupcast on PC5 by a UE for SL-POS according to an embodiment of the disclosure.

Referring to FIG. 8, in step 3 in the following description, an SL-P message using groupcast/ broadcast described above may be transferred to a target UE (e.g., the target UE in FIG. 7A) and/or a reference UE (e.g., the first UE (UE1) in FIG. 7A).

According to an embodiment, a serving cell (e.g., serving gNB) may, in operational stage 0, transmit or transfer higher layer configuration information for sidelink positioning (SL-P) to UE1 (target UE) through at least one method among system information, a downlink (DL) dedicated radio resource control (RRC) message (msg), or a pre-configuration (e.g., SL-P configuration) (0. SL-P configuration information provision to UE1).

According to an embodiment, when connection is established, system information, a DL dedicated RRC message (msg), or a pre-configuration (e.g., SL-P configuration) of the cell may be provided or transferred to each UE (Opt 1. can be provisioned to each UE via serving cell's system information / SIB / dedicated (RRC) msg when connected).

However, the description that the system information, the RRC message, or the pre-configuration of the cell is transferred to each UE merely corresponds to an example. The system information, the DL dedicated RRC message (msg), or the pre-configuration (e.g., SL-P configuration) of the cell may be pre-configured in each UE (Opt 2. preconfigured to each UE).

According to an embodiment, SL-P configuration information may include SL-PRS configuration information such as a Tx resource (pool) of an SL-PRS or an RX resource (pool) of an SL-PRS. For example, the SL-P configuration information may include a per each frequency layer, an SL-PRS subcarrier spacing (SCS), a symbol level, repetition pattern information, beam information (e.g., carrying beam information), information on a bandwidth part (BWP) in which an SL-PRS is transmitted, information on a supported frequency (supporting frequency information), etc. (SL-P configuration information includes:
- SL-PRS configuration information such as Tx resource (pool) of SL-PRS, Rx resource (pool) of SL-PRS
- per each frequency layer, SL-PRS SCS, symbol level / repetition pattern info, carrying beam information, BWP on which SL-PRS is transmitted, supporting frequency information, etc.)

According to an embodiment, the SL-PRS configuration information may be associated with a Dest L2 ID. For example, the Dest L2 ID may be dedicated to groupcast in a network implementation.

(SL-PRS configuration information is associated with Dest L2 ID dedicated to groupcast in the network implementation.)

According to an embodiment, the SL-PRS configuration information may be information received from a location management function (LMF) through an NR positioning protocol A (NRPPa) message. The SL-PRS configuration information may be based on information exchange between the LMF and a prose server associated with SL-P.

(This information is from LMF via NRPPa message, and based on transaction between LMF and SL-P related Prose server.)

For example, Dest L2 ID1 may be SL-P configuration 1 and Dest L2 ID2 may be SL-P configuration 2. (Example) Dest L2 ID1: SL-P configuration 1, DestL2 ID2: SL-P configuration 2, etc.

According to an embodiment, after the above configuration (e.g., configuration 1 or configuration 2) is transferred or provided to each UE, group information (e.g., a group L2 ID used for Tx/Rx) may be transferred or provided to each UE in stage 1 (After this configuration to each UE, in step 1, each UE is provisioned the group information i.e., group L2 ID to use for Tx/Rx).

According to an embodiment, in step 1 (or stage 2), a policy and authentication for a group may be provided or transferred by a policy control function (PCF). As another example, the policy and authentication for a group may be provided or transferred to UEs from another network entity.

(1. authorization and policy regarding a group can be provisioned by PCF, or other network entity to Ues.)

According to an embodiment, the policy and authentication for a group may include, for example, a group ID, IDs of members of the group, and/or a unicast L2 ID. A group ID, IDs of members of the group, and/or a unicast L2 ID may be given or provided by a pre-configured SL-P layer or an application layer (1-1).

(1-1. there could be group ID and/or its member IDs, and/or unicast L2 ID, and these can be given by application layer or SL-P layer preconfigured.)

According to an embodiment, the policy and authentication for a group may include only an indicator or indication indicating some conditions, such as a waiting time, to obtain or get a request for a discovery announcement/solicitation. During this time condition (waiting time), a sender UE may receive a response message for the discovery solicitation. A particular group may be configured by UEs having transmitted the received message (1-2).

(1-2. Or there could be only some condition indication such as waiting time to get response for discovery announcement/solicitation. Based on this condition, a UE can determine its own (temporal) group of Ues.)

According to an embodiment, in stage 2 or step 2, member configuration information may be obtained by a decision made by the target UE itself for a group or a network/application (2).

(2. target UE's own decision for group or network/application can give the member information.)

According to an embodiment, with respect to an autonomous decision by the UE, UEs may respond to a first discovery message within a given timer value at UE 1. For example, the first discovery message may be an announce message (announce msg) in model A or a solicitation message in model B. The UE initiating the discovery message may define a group of SL-P UEs (i.e., perform selection or down selection, based on a responding UE). To this end, UE1 may transmit a discovery request message and start a timer. If there are UE2, UE3, and UE4 having responded before timer expiry, the UEs (UE2, UE3, and UE4) having responded may be determined as a group by U1 (2-1).

(2-1. For UE's autonomous decision, within a given timer value at UE 1, the Ues have responded to the first discovery msg (announce msg in model A/solicitation msg in model B), the UE initiating discovery msg can define (further down select based on the responders) the group of SL-P Ues. For this, UE1 transmits discovery solicitation msg and start the timer. If there are UE2,3,4 responded within timer expiry, they can be determined by a group by UE1.)

According to an embodiment, a network/application layer may transfer, provide, or give member information (member info). After or during a discovery message transaction, the target UE/concerned UE may add the UEs to a dest L2 ID matching given group information to include or configure a group (2-2).

(2-2. network/application layer gives the member info, then during/after discovery msg transaction, target UE/concerned UE can comprise a group by adding Ues with dest L2 ID matching with that given group information.)

According to an embodiment, all SL-P messages (SL-P msgs) may include group information that requests, from UE1, other group members (e.g., UE2) to participate in a group (3-1). If another member accepts the request, the other member may respond to UE1 positively, with acknowledgment, or with acceptance. If another member does not accept the request, the other member may respond negatively, without acknowledgment, or without acceptance (3-1). (3-1. all SL-P msg including there would be group formation indication from UE 1 to other group member, and if other member accept, it can respond positively to UE1. otherwise, other member can respond negatively.)

According to an embodiment, a ranging request message (ranging request msg) may include a role for SL-P of UE1. The ranging request message may request an opposite role for SL-P from UEs to remain in the group. A role may correspond to a target UE, a reference UE, an SL-PRS transmission UE, and/or an SL-PRS measurement UE. If other members accept the request, the other members may respond positively. If other members do not accept the request, the other members may indicate a preference level for the ranging request message (3-2).

(3-2. ranging request msg can include role of SL-P of UE1 or request of some the opposite role for SL-P to remaining Ues within a group. Here the role is the target UE or reference UE and/or SL-PRS transmission UE or SL-PRS measurement UE. If other member accept it, it can respond positively. Otherwise, other member can indicate its preference w.r.t. ranging request msg.)

According to an embodiment, when the role of UE1 is agreed by other members due to the UE including a location server function, UE 1 may provide assistance data for SL-P. A message (or assistance data) may include an SL-P configuration.

(3-3. if the role of UE1 is agreed by other members as UE including location server function, then it can provide assistance data for SL-P. This msg can include the SL-P configuration as below:)

For example, the SL-P configuration may include at least one of
- a Tx pool, a positioning frequency layer, or a BWP for SL-PRS transmission, and
- an Rx pool, a frequency, a BWP for SI-PRS measurement.

According to an embodiment, the Tx pool and the Rx pool may be required to be mapped according to one-to-one or one-to-all correspondence per each Tx or Rx pool. Therefore, transmission may be always identified by a receiver in a restricted resource pool.

Alternatively, the target UE may indicate only an SL-PRS resource to be transmitted by making a member/reference UE remain in the group.

(- TX pool, positioning freq layer, BWP for SL-PRS to transmit
- RX pool, freq, BWP for Sl-PRS to measure
- These Tx pool and Rx pool should be one-to-one or one-to-all mapping per each Tx and Rx pool, so that transmission always can be identified by the receiver within the restricted resource pool. Or target UE can indicates only SL-PRS resource to be transmitted by remaining member / reference UE in a group.)

According to an embodiment, the above information may be configured in UE1 in advance and may be received from the system information of the serving cell in step 0.

(-These information can be preconfigured at UE1 or received from serving cell's system information as in step 0.)

According to an embodiment, UE1 may transmit a measurement command together with reporting configurations. If the UE's discovery is successful, at least from that time, a reference UE may start to transmit an SL-PRS. Then, the target UE may start to measure SL-PRSs.

(3-4. UE1 can transmit measurement command with reporting configurations. Then

If UE's discovery was successful, then at least from that time, ref UE can start the transmission of SL-PRS. And target UE also can start the measurement on those SL-PRS.)

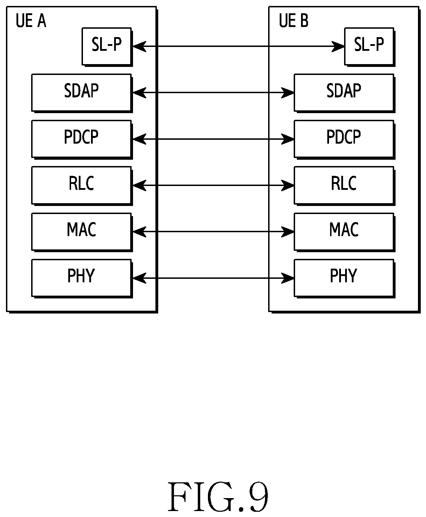

FIG. 9 is an example diagram of a case where a user plane (UP) protocol stack is used when a groupcast/broadcast SL-P message is transmitted according to an embodiment of the disclosure.

Referring to FIG. 9, a protocol architecture for a case where user traffic is considered to transfer an SL-P message or SL-P information according to an embodiment through groupcast or broadcast is illustrated.

According to an embodiment, a conventional long-term evolution positioning protocol (LPP) that is a protocol message having a similar usage as that of SL-P is control plane traffic. Furthermore, conventional groupcast on sidelink has been used only for traffic of a user plane. Accordingly, in order to transmit an SL-P message on sidelink through groupcast, it may be required to change data in a control plane to user plane traffic transmission.

In the first case according to an embodiment, in an SDAP, use of a dedicated flow for data radio bearer (DRB) or SRB mapping of an SL-P message may be required. For example, since there may be no separate QoS flow information for SL-P, it may need to use dedicated flow to DRB (or SRB) mapping of an SL-P message (This may be because legacy QoS flow and DRP mapping is configured by a core network (CN), but out-of-coverage is assumed in a case of PC5only). For example, a DRB may correspond to a data radio bearer.

According to an embodiment, in a case where dedicated flow-to-DRB (or SRB) mapping information is used, the dedicated flow-to-DRB(or SRB) mapping from a network may have a value defined as default mapping, and the dedicated flow-to-DRB(or SRB) mapping information may have an SL-P dedicated value configured by a network.

In the second case according to an embodiment, SL-P may be immediately or directly encapsulated in a PDCP without an SDAP layer.

According to an embodiment, in both the first case and the second case described above, a particular DRB for SL-P messages needs to be established or configured, and a message may be transmitted and/or received through the established or configured DRB.

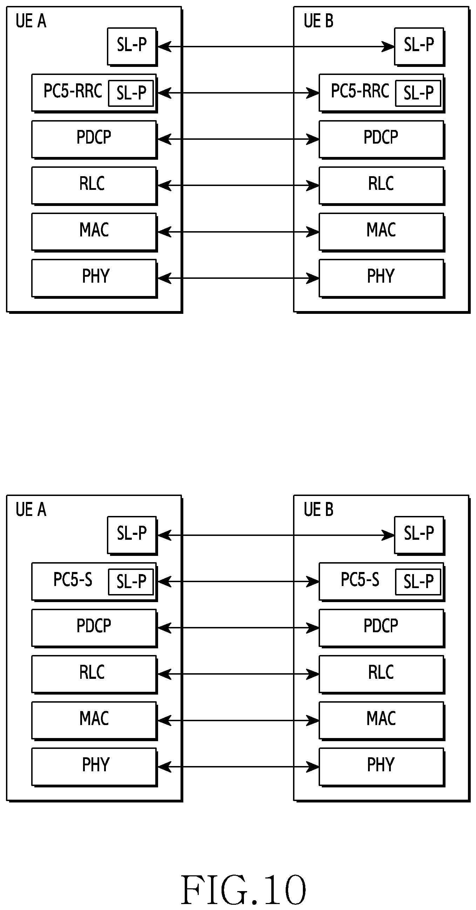

FIG. 10 is an example diagram of a case where a control plane (CP) protocol stack is used when a groupcast/broadcast SL-P message is transmitted according to an embodiment of the disclosure.

Referring to FIG. 10, a protocol architecture for a case where control information is considered to transfer an SL-P message/information according to an embodiment through groupcast is illustrated.

According to an embodiment, as the first case, PC5-RRC may be disposed or exist to be lower than SL-P. In an embodiment, an SL-P message may be separately encoded or encapsulated in a designated or particular PC5-RRC message. As another example, an SL-P message may be included as a part of a field of a particular PC5-RRC message. Alternatively, a new PC5-RRC message may include SL-P message information. In the above cases, a peer UE may extract or obtain an encapsulated SL-P message from a received PC5-RRC message, or may receive an SL-P message in a field.

According to an embodiment, as the second case, a method of using PC5-S or prose layer/entity may exist. An SL-P message/information may be encapsulated in a particular PC5-S message, or a designated or particular PC5-S message may be an SL-P specific message. In the above cases, a peer UE may extract or obtain an encapsulated SL-P message from a received PC5-S message, or may receive an SL-P message in an included field. In the case described above, an SL-P message may be transmitted through unicast/groupcast and/or broadcast. As another example, in a case of a ranging request/response and/or measurement report in an SL-P message, even unicast only or groupcast may be possible.

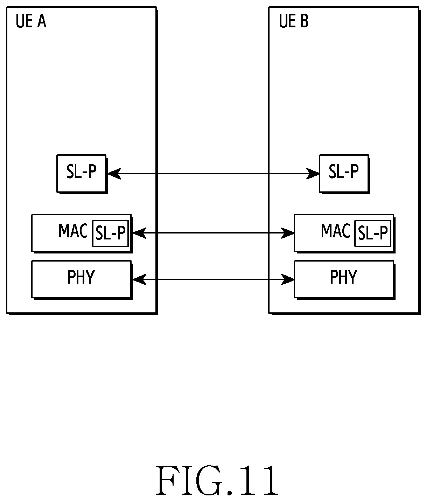

FIG. 11 is an example diagram of a case where a MAC CE is used when a groupcast SL-P message is transmitted according to an embodiment of the disclosure.

Referring to FIG. 11, a protocol architecture for a case where a medium access control control element (MAC CE) is used to transfer an SL-message/information according to an embodiment through groupcast is illustrated.

According to an embodiment, SL-P messages or SL-P-related information may be transferred in or through a MAC CE.

According to an embodiment, SL-P may be processed by a PC5-RRC or PC5 MAC CE, and the PC5-RRC or a PC5 MAC CE may be transmitted through groupcast or broadcast.

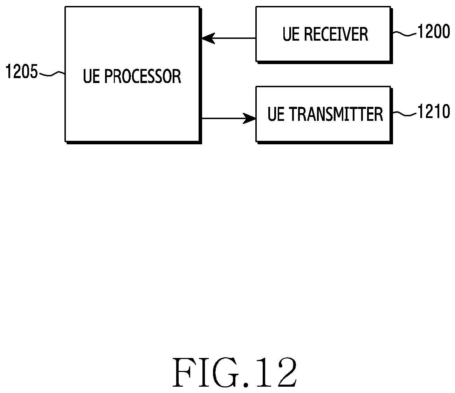

FIG. 12 illustrates a structure of a UE in a wireless communication system according to an embodiment of the disclosure.

Referring to FIG. 12, the UE may include a transceiver, which refers to a UE receiver 1200 and a UE transmitter 1210 as a whole, a memory (not illustrated), and a UE processor 1205 (or UE controller or processor). The UE transceiver 1200 and 1210, the memory, and the UE processor 1205 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip. According to an embodiment, the UE in FIG. 12 of the disclosure may correspond to the UE 1a-35 in FIG. 1.

The transceiver 1200 and 1210 may transmit/receive signals with the base station. The signals may include control information and data. In order to transmit/receive signals, the transceiver 1200 and 1210 may include an RF transmitter configured to up-convert and amplify the frequency of transmitted signals, an RF receiver configured to low-noise-amplify received signals and down-convert the frequency thereof, and the like. However, this is only an embodiment of the transceiver 1200 and 1210, and the components of the transceiver 1200 and 1210 are not limited to the RF transmitter and the RF receiver.

In addition, the transceiver 1200 and 1210 may receive signals through a radio channel, output the same to the UE processor 1205 or a processor included in the UE processor 1205, and transmit signals output from the UE processor 1205 or the processor through the radio channel.

The memory may store programs and data necessary for operations of the base station. In addition, the memory may store control information or data included in signals transmitted/received by the UE. The memory may include a storage medium such as a ROM, a RAM, a hard disk, a CD-ROM, or a DVD, or a combination of storage media. In addition, the memory may include multiple memories.

Also, according to an embodiment, the UE processor 1205 or the processor included in the UE processor 1205 may control a series of operations so that the UE can operate according to the above-described embodiments. For example, the UE processor 1205 or the processor (e.g., communication processor) included in the UE processor 1205 may control components of the UE to receive downlink control information (DCI) configured in two layers so as to concurrently receive multiple physical downlink shared channels (PDSCHs). The UE processor 1205 or the processor included in the UE processor 1205 may include multiple processors, and the processor may perform operations of controlling the components of the UE by executing programs stored in the memory.

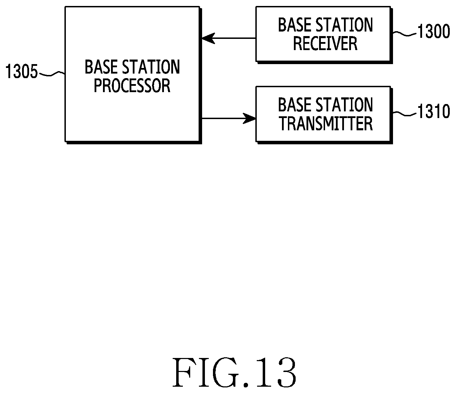

FIG. 13 illustrates a structure of a base station in a wireless communication system according to an embodiment of the disclosure.

Referring to FIG. 13, the base station may include a transceiver, which refers to a base station receiver 1300 and a base station transmitter 1310 as a whole, a memory (not illustrated), and a base station processor 1305 (or base station controller or processor). The base station transceiver 1300 and 1310, the memory, and the base station processor 1305 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip. According to an embodiment, the base station FIG. 13 of the disclosure may correspond to the NR gNB 2c-10 in FIG.1 and/or the eNB 2c-30 in FIG. 1.

The transceiver 1300 and 1310 may transmit/receive signals with the UE. The signals may include control information and data. In order to transmit/receive signals, the transceiver 1300 and 1310 may include an RF transmitter configured to up-convert and amplify the frequency of transmitted signals, an RF receiver configured to low-noise-amplify received signals and down-convert the frequency thereof, and the like. However, this is only an embodiment of the transceiver 1300 and 1310, and the components of the transceiver 1300 and 1310 are not limited to the RF transmitter and the RF receiver.

In addition, the transceiver 1300 and 1310 may receive signals through a radio channel, output the same to the base station processor 1305 or a processor (e.g., communication processor) included in the base station processor 1305, and transmit signals output from the base station processor 1305 or the processor included in the base station processor 1305 through the radio channel.

The memory may store programs and data necessary for operations of the base station. In addition, the memory may store control information or data included in signals transmitted/received by the base station. The memory may include a storage medium such as a ROM, a RAM, a hard disk, a CD-ROM, or a DVD, or a combination of storage media. In addition, the memory may include multiple memories.

The base station processor 1305 or the processor included in the base station processor 1305 may control a series of operations so that the base station can operate according to the above-described embodiments. For example, the base station processor 1305 or the processor may control components of the base station to configure DCI configured in two layers including allocation information regarding multiple PDSCHs and to transmit the same. The base station processor 1305 or the processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

According to an embodiment, a method performed by a first terminal in a wireless communication system may include transmitting, to a plurality of second terminals included in a group for sidelink positioning (SL-P), SL-P configuration information including at least one of capability information on the first terminal, assistance information for the SL-P, or location request information through groupcast or broadcast, transmitting an SL-positioning reference signal (PRS) to the plurality of second terminals, based on the SL-P configuration information, and receiving measurement reports for the SL-PRS from the plurality of second terminals.

According to an embodiment, the SL-P configuration information may be transmitted through a data radio bearer (DRB) mapped to a quality-of-service (QoS) flow for the SL-P, and a QoS flow identifier (QFI) for mapping between the DRB and the QoS flow may be configured through an upper layer or configured in advance for the first terminal.

According to an embodiment, an identity (ID) of the group is configured for the first terminal through an upper layer.

According to an embodiment, the capability information on the first terminal may include information on an SL-P method supported by the first terminal, the assistance information for the SL-P may include information on a frequency band for the SL-PRS, and the location request information may include information that requests the measurement reports for the SL-PRS from the second terminals.

According to an embodiment, a first terminal in a wireless communication system may include a transceiver and a controller coupled with the transceiver, wherein the controller is configured to transmit, to a plurality of second terminals included in a group for sidelink positioning (SL-P), SL-P configuration information including at least one of capability information on the first terminal, assistance information for the SL-P, or location request information through groupcast or broadcast, transmit an SL-positioning reference signal (PRS) to the plurality of second terminals, based on the SL-P configuration information, and receive measurement reports for the SL-PRS from the plurality of second terminals.

According to an embodiment, the SL-P configuration information may be transmitted through a data radio bearer (DRB) mapped to a quality-of-service (QoS) flow for the SL-P, and a QoS flow identifier (QFI) for mapping between the DRB and the QoS flow may be configured through an upper layer or configured in advance for the first terminal.

According to an embodiment, an identity (ID) of the group is configured for the first terminal through an upper layer.

According to an embodiment, the capability information on the first terminal may include information on an SL-P method supported by the first terminal, the assistance information for the SL-P may include information on a frequency band for the SL-PRS, and the location request information may include information that requests the measurement reports for the SL-PRS from the second terminals.

According to an embodiment, a method performed by a second terminal included in a group for sidelink positioning (SL-P) in a wireless communication system may include receiving, from a first terminal, SL-P configuration information including at least one of capability information on the first terminal, assistance information for the SL-P, or location request information through groupcast or broadcast, receiving, from the first terminal, an SL-positioning reference signal (PRS) based on the SL-P configuration information, and transmitting a measurement report for the SL-PRS to the first terminal.

According to an embodiment, the SL-P configuration information may be received through a data radio bearer (DRB) mapped to a quality-of-service (QoS) flow for the SL-P.

According to an embodiment, an identity (ID) of the group is configured for the second terminal through an upper layer.

According to an embodiment, the capability information on the first terminal may include information on an SL-P method supported by the first terminal, the assistance information for the SL-P may include information on a frequency band for the SL-PRS, and the location request information may include information that requests the measurement report for the SL-PRS from the second terminal.

According to an embodiment, a second terminal included in a group for sidelink positioning (SL-P) in a wireless communication system may include a transceiver and a controller coupled with the transceiver, wherein the controller is configured to receive, from a first terminal, SL-P configuration information including at least one of capability information on the first terminal, assistance information for the SL-P, or location request information through groupcast or broadcast, receive, from the first terminal, an SL-positioning reference signal (PRS) based on the SL-P configuration information, and transmit a measurement report for the SL-PRS to the first terminal.

According to an embodiment, the SL-P configuration information may be received through a data radio bearer (DRB) mapped to a quality-of-service (QoS) flow for the SL-P.

According to an embodiment, an identity (ID) of the group is configured for the second terminal through an upper layer.

## Claims

1. A method performed by a first terminal in a wireless communication system, the method comprising:
transmitting, to a plurality of second terminals included in a group for sidelink positioning (SL-P), SL-P configuration information including at least one of capability information on the first terminal, assistance information for the SL-P, or location request information through groupcast or broadcast;
transmitting an SL-positioning reference signal (PRS) to the plurality of second terminals, based on the SL-P configuration information; and
receiving measurement reports for the SL-PRS from the plurality of second terminals.

2. The method of claim 1, wherein the SL-P configuration information is transmitted through a data radio bearer (DRB) mapped to a quality-of-service (QoS) flow for the SL-P, and
wherein a QoS flow identifier (QFI) for mapping between the DRB and the QoS flow is configured through an upper layer or configured in advance for the first terminal.

3. The method of claim 1, wherein an identity (ID) of the group is configured for the first terminal and/or the plurality of second terminals through an upper layer.

4. The method of claim 1, wherein the capability information on the first terminal comprises information on an SL-P method supported by the first terminal,
wherein the assistance information for the SL-P comprises information on a frequency band for the SL-PRS, and
wherein the location request information comprises information that requests the measurement reports for the SL-PRS from the second terminals.

5. A first terminal in a wireless communication system, the first terminal comprising:
a transceiver; and
a controller coupled with the transceiver,
wherein the controller is configured to:
transmit, to a plurality of second terminals included in a group for sidelink positioning (SL-P), SL-P configuration information including at least one of capability information on the first terminal, assistance information for the SL-P, or location request information through groupcast or broadcast;
transmit an SL-positioning reference signal (PRS) to the plurality of second terminals, based on the SL-P configuration information; and
receive measurement reports for the SL-PRS from the plurality of second terminals.

6. The first terminal of claim 5, wherein the SL-P configuration information is transmitted through a data radio bearer (DRB) mapped to a quality-of-service (QoS) flow for the SL-P, and
wherein a QoS flow identifier (QFI) for mapping between the DRB and the QoS flow is configured through an upper layer or configured in advance for the first terminal.

7. The first terminal of claim 5, wherein an identity (ID) of the group is configured for the first terminal and/or the plurality of second terminals through an upper layer.

8. The first terminal of claim 5, wherein the capability information on the first terminal comprises information on an SL-P method supported by the first terminal,
wherein the assistance information for the SL-P comprises information on a frequency band for the SL-PRS, and
wherein the location request information comprises information that requests the measurement reports for the SL-PRS from the second terminals.

9. A method performed by a second terminal included in a group for sidelink positioning (SL-P) in a wireless communication system, the method comprising:
receiving, from a first terminal, SL-P configuration information including at least one of capability information on the first terminal, assistance information for the SL-P, or location request information through groupcast or broadcast;
receiving, from the first terminal, an SL-positioning reference signal (PRS) based on the SL-P configuration information; and
transmitting a measurement report for the SL-PRS to the first terminal.

10. The method of claim 9, wherein the SL-P configuration information is received through a data radio bearer (DRB) mapped to a quality-of-service (QoS) flow for the SL-P.

11. The method of claim 9, wherein an identity (ID) of the group is configured for the first terminal and/or the second terminal through an upper layer.

12. The method of claim 9, wherein the capability information on the first terminal comprises information on an SL-P method supported by the first terminal,
wherein the assistance information for the SL-P comprises information on a frequency band for the SL-PRS, and
wherein the location request information comprises information that requests the measurement report for the SL-PRS from the second terminal.

13. A second terminal included in a group for sidelink positioning (SL-P) in a wireless communication system, the second terminal comprising:
a transceiver; and
a controller coupled with the transceiver,
wherein the controller is configured to:
receive, from a first terminal, SL-P configuration information including at least one of capability information on the first terminal, assistance information for the SL-P, or location request information through groupcast or broadcast;
receive, from the first terminal, an SL-positioning reference signal (PRS) based on the SL-P configuration information; and
transmit a measurement report for the SL-PRS to the first terminal.

14. The second terminal of claim 13, wherein the SL-P configuration information is received through a data radio bearer (DRB) mapped to a quality-of-service (QoS) flow for the SL-P.

15. The second terminal of claim 13, wherein an identity (ID) of the group is configured for the first terminal and/or the second terminal through an upper layer.
